# EUROPÄISCHE PATENTSCHRIFT

(11) **EP 4 526 576 B1**
(45) Veröffentlichungstag und Bekanntmachung des Hinweises auf die Patenterteilung: **03.09.2025**
(21) Anmeldenummer: 23772771.4
(22) Anmeldetag: 07.09.2023
(51) Int. Cl.: F16G 13/12, B21J 1/04, F16G 15/12

(54) **KETTENGLIED UND EIN VERFAHREN ZUR HERSTELLUNG EINES KETTENGLIEDES**
CHAIN LINK AND A METHOD FOR PRODUCING A CHAIN LINK
MAILLON DE CHAÎNE ET PROCÉDÉ DE FABRICATION D'UN MAILLON DE CHAÎNE

(30) Priorität: 27.09.2022 DE 102022124870
(43) Veröffentlichungstag der Anmeldung: 26.03.2025
(73) Patentinhaber: Thiele GmbH & Co. KG, 58640 Iserlohn (DE)
(72) Erfinder: PANKÖKER, Andreas, 44319 Dortmund (DE); VÖLZ, Rene, 44319 Dortmund (DE)
(74) Vertreter: Osterhoff, Utz
(86) Internationale Anmeldenummer: PCT/DE2023/100665
(87) Internationale Veröffentlichungsnummer: WO 2024/067908

(56) Entgegenhaltungen:
- CN-A- 106 363 354
- CN-B- 108 223 695
- DE-A1- 102010 013 475
- DE-A1- 2 108 916
- DE-B3- 102016 121 021
- GB-A- 2 233 260
- GB-A- 605 645

## Beschreibung

Die vorliegende Erfindung betriff ein Kettenglied für eine Gliederkette gemäß den Merkmalen von Patentanspruch 1.

Die vorliegende Erfindung betrifft weiterhin ein Verfahren zur Herstellung eines Kettenglieds für eine Gliederkette gemäß den Merkmalen von Patenanspruch 7.

In Rede stehende Gliederketten werden insbesondere im Bergbau eingesetzt und hier insbesondere im untertägigen Bergbau. Sie benötigen eine große Festigkeit zur Übertragung der Bewegungsenergie auf Gewinnungsgeräte, beispielsweise als Hobel- oder auch als Förderkette. In solchen Kettentrieben laufen die Ketten über Kettenräder angetrieben, insbesondere in einem Obertrum und einem Untertrum.

Hierzu besteht die Gliederkette aus Horizontalgliedern, die im Einbauzustand im Wesentlichen horizontal verlaufen und Vertikalgliedern, welche im Einbauzustand im Wesentlichen vertikal orientiert verlaufend angeordnet sind. Die Horizontal- und Vertikalglieder sind jeweils für sich als insbesondere umlaufendes Kettenglied ausgebildet. Sie weisen hierzu jeweils zwei parallel liegende Schenkel auf. Die Schenkel sind an ihren Enden über eine jeweilige Rundung verbunden. In den Rundungen greifen die Horizontal- und Vertikalkettenglieder jeweils ineinander.

Während ihres Einsatzes sind die Ketten neben der zu übertragenden Zugkraft, insbesondere auch abrasivem Verschleiß ausgesetzt.

Eine Reduzierung der Schenkelquerschnittsfläche bei gleichbleibender Querschnittsfläche der Rundungen, zur Reduzierung des Eigengewichts und der Abmessung einer Gliederkette, ist im Stand der Technik bekannt und wird beispielsweise in der DE 103 48 491 B3 offenbart. Hierzu wird das betreffende Kettenglied durch einen Schmiedeprozess als Flachkettenglied mit abgeflachten Schenkeln ausgeführt.

Die DE 10 2010 013 475 A1 offenbart einen Kettenstrang, welcher aus einzelnen Horizontalgliedern und vertikalen Flachgliedern besteht.

Die Aufgabe der vorliegenden Erfindung ist es, ein Kettenglied bereitzustellen, das in Bezug auf sein Eigengewicht und die zu übertragende Zugkraft gegenüber dem Stand der Technik optimiert und verbessert ist.

Die zuvor genannte Aufgabe wird bei einem Kettenglied gemäß den Merkmalen im Patentanspruch 1 gelöst.

Eine weitere Aufgabe der vorliegenden Erfindung ist es, ein Herstellungsverfahren aufzuzeigen, mit dem ein Kettenglied mit guter Formgebungsfreiheit sowie einem verbesserten Materialgefüge hergestellt werden kann.

Diese Aufgabe wird erfindungsgemäß mit einem Verfahren zur Herstellung eines Kettengliedes gemäß den Merkmalen im Patentanspruch 7 gelöst.

Vorteilhafte Ausgestaltungsvarianten der vorliegenden Erfindung sind in den abhängigen Ansprüchen beschrieben.

Das erfindungsgemäße Kettenglied ist Teil einer Gliederkette, die auch als Förderkette oder Flachgliederkette bezeichnet werden kann und insbesondere im Bergbau eingesetzt wird. Das Kettenglied verfügt über jeweils zwei parallel zueinander verlaufende Schenkel, wobei die Schenkel endseitig über je eine Rundung miteinander verbunden sind.

Die Schenkel und die Rundung des Kettengliedes sind in ihren jeweiligen Querschnitten kreisrund ausgebildet, wobei die Schenkel eine geringere Querschnittsfläche gegenüber den Querschnittsflächen der Rundungen aufweisen.

Durch die verringerte Querschnittsfläche in den Schenkeln im Vergleich zu den Rundungen wird zunächst realisiert, dass das Kettenglied leichter ist gegenüber einem vergleichbaren Kettenglied mit umlaufend gleicher Querschnittsfläche.

Die zu übertragende Zugkraft ist aufgrund der Querschnittsabnahme in den Schenkeln nicht beeinflusst. Mithin steht die volle, aufgrund der Querschnittsfläche der Rundung mögliche zu übertragende Zugkraft zur Verfügung. Aufgrund des geringeren Eigengewichts der Gliederkette reduziert sich der Verschleiß beim Betrieb der aus den Kettengliedern gebildeten Gliederkette. Durch die geringeren Querschnittsflächen, insbesondere im Bereich der Schenkel, kann gleichzeitig Materialaufwand zur Herstellung der Gliederkette eingespart werden, weshalb auch die Materialkosten sinken.

Erfindungsgemäß zeichnet sich das Kettenglied nunmehr dadurch aus, dass das Kettenglied durch Radialschmieden, auch als Rundkneten oder Längsschmieden bezeichnet, hergestellt ist. Das Radialschmieden ist im Wesentlichen ein Freiformschmieden, bei dem mit üblicherweise 3 oder 4 gegenläufigen Gesenken oder Stempeln, die in einer senkrecht zur Längsachse eines Werkstücks liegenden Ebene radial um die Längsachse des Werkstücks angeordnet sind, der Querschnitt des Werkstücks in einem Verformungsbereich reduziert wird. Das Werkstück wird dabei zwischen den einzelnen Stempelschlägen um die eigene Längsachse rotiert. Im Vergleich zur Herstellung eines Kettengliedes mittels eines herkömmlichen Schmiedeverfahrens, bei dem das Werkstück zwischen einem flachen Obergesenk und einem flachen Untergesenk geschmiedet wird, hat das Radialschmieden zwei wesentliche Vorteile:
- Fähigkeit zum Schmieden von niedrigduktilen und schwer verformbaren Stählen und Legierungen aufgrund des günstigen Spannungs- und Dehnungszustands des Metalls in der Verformungszone.
- Vermeidung von Rissen oder Brüchen an der Werkstoffoberfläche durch die radiale Anordnung der Stempel.

Ferner führt die durch das Radialschmieden erzeugte Querschnittsreduzierung des Kettengliedhalbzeuges, insbesondere im Bereich der Schenkel, zu einer Längsverformung des Kettengliedhalbzeuges in Längsrichtung des Kettengliedhalbzeuges im Verformungsbereich. Dies wiederum induziert ein längsgerichtetes Werkstoffgefüge im Verformungsbereich. Hier hat sich gezeigt, dass durch das längsgerichtete Werkstoffgefüge die Belastbarkeit der Kettenglieder und insbesondere der Schenkel in Kettengliedlängsrichtung bei Beaufschlagung der Gliederkette mit einer Zugkraft erhöht ist. Zudem ermöglicht die rotationssymmetrische Form des geformten Kettengliedhalbzeugs Fehler beim Einlegen in eine Biegevorrichtung zu vermeiden.

Erfindungsgemäß wird zwar ein kreisrunder Querschnitt des Kettengliedhalbzeuges während der Herstellung erzeugt, die Oberfläche des Kettengliedhalbzeuges weist allerdings durch den Radialschmiedeprozess minimale Unregelmäßigkeiten auf. Somit kann ein durch Radialschmieden hergestelltes Kettenglied durch sein Materialgefüge und die Oberflächenbeschaffenheit klar von anderweitig hergestellten Kettengliedern unterschieden werden.

Das Radialschmieden wird bei axialem Vorschub des Kettengliedhalbzeuges durchgeführt. Mithin wird das Kettengliedhalbzeug, bei dem es sich bevorzugt um einen Profilstab handelt, während des Radialschmiedevorgangs in seiner Axialrichtung relativ zu den Gesenken bewegt. Der Schmiedevorgang selbst führt zu einer Durchmesserreduzierung des Kettengliedhalbzeuges, was zu einer Längsverformung des Kettengliedhalbzeuges in seiner axialen Richtung führt. Durch den axialen Vorschub des Kettengliedhalbzeuges können Längenabschnitte, beispielsweise die späteren Schenkel des Kettengliedes, ausgeformt werden. Das Radialschmieden bei axialem Vorschub bildet ein homogenes und längsgerichtetes Werkstoffgefüge im Verformungsbereich des Kettengliedhalbzeuges aus. Insbesondere wird ein gleichmäßiger Faserverlauf in Axialrichtung ausgebildet. Der Faserverlauf ist eine strukturelle metallographische Eigenschaft, nämliche eine zeilenartige Anordnung der Kristallite des Primärgefüges bzw. der enthaltenen Korngrenzen und Einschlüsse.

Dieses Gefüge hat sich als Vorteilhaft für die Belastbarkeit der Verformungsbereiche bei Beaufschlagung mit einer Zugkraft in Axialrichtung herausgestellt, da der Faserverlauf mit dem Hauptkraftlinienfluss in Zugrichtung übereinstimmt.

Sind die Verformungsbereiche nach dem Umformen des Kettengliedhalbzeuges zum Kettenglied die Schenkel des Kettengliedes, ist somit insbesondere die Belastbarkeit der in Kettenlängsrichtung orientierten Schenkel bei einer in Kettenlängsrichtung auf das Kettenglied wirkenden Zugkraft erhöht. Das Materialgefüge unterscheidet sich nachweislich vom Materialgefüge bekannter Kettenglieder.

Bevorzugt ist ein Übergangsbereich von den Querschnittsflächen der Schenkel zu den Querschnittsflächen der Rundungen am jeweiligen Ende der Schenkel beginnend ausgebildet. Der Übergangsbereich kann sich auch teilweise im Bereich der Schenkel befinden. Insbesondere ist der Querschnitt des Übergangsbereiches in seinem Längsverlauf kreisrund ausgeführt.

Der Durchmesser der Schenkel ist zwischen 5 % und 15 % und bevorzugt zwischen 9 % und 11 % kleiner als der Durchmesser der Rundung. Hier hat sich gezeigt, dass bei diesen Durchmesserverhältnissen das durch das Radialschmieden induzierte vorteilhafte längsgerichtete Materialgefüge über den gesamten Querschnitt der Schenkel ausgebildet ist. Bei anderweitigen Durchmesserverhältnissen kann das vorteilhafte Materialgefüge beispielsweise nur an den äußeren Rändern der Schenkel ausgebildet sein. Diese Durchmesserverhältnisse stellen somit ein Optimum für die Belastbarkeit der Kettenglieder bzw. Schenkel in Kettengliedlängsrichtung dar.

Weiterhin weisen bei Seitenansicht der Mittellängsachsenebene die innere Konturlinie und die äußere Konturlinie des Kettengliedes bevorzugt eine umlaufend durchgehende Ovalform auf. Die Ovalform wird durch zwei parallel zueinander verlaufende Seiten und eine die jeweiligen Enden der Seiten verbindende halbkreisförmige Konfiguration charakterisiert. Diese Ovalform der inneren und äußeren Konturlinie wird an keiner Stelle durch eine Einschnürung, einen Steg, einen Absatz, einen Stufenabsatz eine Schräge oder dergleichen unterbrochen. Es hat sich gezeigt, dass diese ovale Ausführungsform besonders vorteilhaft für die Spannungsverteilung und den Kraftfluss innerhalb des Kettengliedes ist.

Mit dem erfindungsgemäßen Verfahren wird ein Kettenglied für eine Gliederkette hergestellt. Das Kettenglied weist zwei parallel zueinander verlaufende Schenkel auf, die endseitig über Rundungen miteinander verbunden sind. Die Schenkel und die Rundungen des Kettengliedes sind in ihren jeweiligen Querschnitten kreisrund ausgebildet, wobei die Schenkel geringere Querschnittsflächen gegenüber den Querschnittsflächen der Rundungen aufweisen. Das Kettenglied wird durch Radialschmieden mit folgenden Verfahrensschritten hergestellt:
- Bereitstellen eines Profilstabes, wobei der Profilstab aus einem Stahlwerkstoff ausgebildet ist,
- Einlegen des Profilstabes in eine Radialschmiedemaschine und radiales Schmieden unter längenabschnittsweiser Verkleinerung des Durchmessers des Profilstabes, so dass der Profilstab im geschmiedeten Längenabschnitt axial gestreckt wird, wobei der Durchmesser im Bereich der späteren Schenkel verkleinert wird,
- Vorzugsweise axialer Vorschub des Profilstabes während des Radialschmiedevorgangs zur Ausformung der Längenabschnitte der späteren Schenkel,
- Entnahme des radialgeschmiedeten Kettengliedhalbzeuges und Umformen zu einem Kettenglied sowie Verschweißen von stirnseitigen Enden des umgeformten Kettengliedes.

Als erfindungswesentlicher Vorteil ist zum einen eine bessere Formgebungsfreiheit zu sehen, da sowohl die Querschnittsflächen an den später herzustellenden Rundungen als auch die Querschnittsflächen an den später herzustellenden Schenkeln individuell, also mit hohen Formgebungsfreiheitsgraden, hergestellt werden können. Dadurch, dass an den Längenabschnitten des hergestellten Kettengliedes mit kleinerer Querschnittfläche kein Material abgetragen werden muss, ist der Materialeinsatz zur Herstellung eines jeden Kettengliedes geringer.

Die Querschnittsreduzierung des Kettengliedhalbzeuges führt zu einer Längsverformung des Kettengliedhalbzeuges in dem Verformungsbereich, was wiederum ein längsgerichtetes Werkstoffgefüge induziert. Wie sich gezeigt hat, ist dies ein weitere erfindungswesentlicher Vorteil, da die längsgerichtete Gefügestruktur die Belastbarkeit der Kettenglieder und insbesondere der Schenkel in Kettengliedlängsrichtung erhöht. Zudem ermöglicht die rotationssymmetrische Form des geformten Kettengliedhalbzeugs Fehler beim Einlegen in eine Biegevorrichtung zu vermeiden.

Beim Radialschmieden wird über mehrere Stempel, die um die Achse eines Werkstücks angeordnet sind, wiederholt Druck auf das Werkstück ausgeübt.

Bei dem Werkstück handelt es sich erfindungsgemäß um einen Profilstab, der aus einem Stahlwerkstoff ausgebildet ist. Der Profilstab weist eine Länge auf, die kürzer ist als die umlaufende Länge des später herzustellenden Kettengliedes. Der Profilstab ist insbesondere massiv ausgebildet und besonders bevorzugt aus einem härtbaren Stahlwerkstoff. Der Profilstab weist bevorzugt einen runden Querschnitt auf.

Dieser bereitgestellte Profilstab wird an seinen beiden Enden oder einseitig in die Radialschmiedemaschine eingespannt, so dass dieser von der Maschine entlang seiner Mittellängsachse gedreht und in axialer Richtung vor und zurückbewegt werden kann. Die radial um den Profilstab angeordneten Stempel üben sodann Druck auf einen definierten Längenabschnitt des Profilsstabes aus. Anschließend wird der Profilstab um seine eigene Achse rotiert und die Stempel üben erneut einen Druck auf den Profilstab aus. So wird die Querschnittsfläche des Profilstabes im geschmiedeten Längenabschnitt reduziert und der Profilstab im Verformungsbereich axial gestreckt. Dieses Verfahren wird solange wiederholt, bis ein vorab definierter Durchmesser im betreffenden Längenabschnitt des Profilstabes erreicht ist. Erfindungsgemäß wird zumindest die Querschnittsfläche im Bereich der späteren Schenkel verkleinert. Auch eine Verkleinerung im Bereich der späteren Rundungen ist möglich.

Nach Abschluss des Radialschmiedevorgangs ist aus dem Profilstab, durch umformen, ein rotationssymmetrisches Kettengliedhalbzeug hergestellt. Die Länge des Kettengliedhalbzeugs entspricht im Wesentlichen der umlaufenden Länge des herzustellenden Kettengliedes. Die Längenabschnitte des Kettengliedhalbzeugs im Bereich der späteren Rundungen als auch die Längenabschnitte des Kettengliedhalbzeug im Bereich der späteren Schenkel des Kettengliedes sind kreisrund ausgebildet.

Das Kettengliedhalbzeug wird dann aus der Radialschmiedemaschine entnommen und umgeformt zu einem Kettenglied. Die zwei stirnseitigen Enden werden durch den Umformprozess stoßweise aneinandergedrückt und verschweißt. Hierzu kann beispielsweise ein Laserschweißen aber auch ein Widerstandsschweißen durchgeführt werden. Alternativ kann auch ein Reibschweißvorgang durchgeführt werden.

Die Längenabschnitte mit den kleineren Querschnittflächen bilden die Schenkel des Kettengliedes aus und die Längenabschnitte mit demgegenüber größeren Querschnittsflächen bilden die Rundungen aus.

Die Querschnittsfläche mindestens einer Rundung entspricht dabei bevorzugt der Querschnittsfläche des Profilstabes.

Bevorzugt kann auch mindestens ein Längenabschnitt einer späteren Rundung beim Radialschmieden verkleinert werden.

Das Kettengliedhalbzeug weist einen Übergangsbereich zwischen den Längenabschnitten der späteren Rundungen und Schenkel auf. Dieser macht bevorzugt zwischen 3 % und 10 % und besonders bevorzugt zwischen 4 % und 7 % der Gesamtlänge des Kettengliedhalbzeuges aus. Hier hat sich gezeigt, dass diese Verhältnisse besonders vorteilhaft für den Kraftfluss und die Spannungsverteilung innerhalb des Kettengliedes sind.

Weiterhin bevorzugt liegen die verschweißten stirnseitigen Enden des ungeformten Kettengliedes im Bereich der Schenkel.

Insbesondere wird der Profilstab in warmem oder halbwarmem Zustand radial geschmiedet. Besonders bevorzugt kann auch das Kettengliedhalbzeug zu dem jeweiligen Kettenglied in warmem Zustand umgeformt werden. Auch vorstellbar ist, dass das Radialschmieden im kalten Zustand durchgeführt wird, bzw. bei Raumtemperatur.

Optional ist es weiterhin vorstellbar, dass das umgeformte und verschweißte Kettenglied vergütet wird.

Weitere Vorteile, Merkmale und Eigenschaften der vorliegenden Erfindung sind Gegenstand der nachfolgenden Beschreibung. Bevorzugte Ausgestaltungsvarianten sind in den Figuren dargestellt. Diese dienen dem einfacheren Verständnis der Erfindung.

Es zeigen:
- Figur 1: einen Teil einer Gliederkette mit erfindungsgemäßen Kettengliedern in Draufsicht,
- Figur 2: ein erfindungsgemäßes Kettenglied in Draufsicht,
- Figur 3: eine Schnittansicht durch ein erfindungsgemäßes Kettenglied gemäß Schnittlinie A-A aus Figur 2,
- Figur 4: eine Schnittansicht durch ein erfindungsgemäßes Kettenglied gemäß Schnittlinie B-B aus Figur 2,
- Figur 5: eine Seitensicht eines Profilstabes,
- Figur 6: eine Seitenansicht eines Kettengliedhalbzeuges,
- Figur 7: eine Seitenansicht einer Radialschmiedemaschine mit eingespanntem Profilstab,
- Figur 8: eine Schnittansicht der Radialschmiedemaschine gemäß Schnittlinie C-C aus Figur 7 und
- Figur 9: eine Schnittansicht einer alternativen Ausführungsvariante der Radialschmiedemaschine.

In den Figuren werden für gleiche oder ähnliche Gegenstände dieselben Bezugszeichen verwendet, auch wenn eine wiederholte Beschreibung aus Vereinfachungsgründen entfällt.

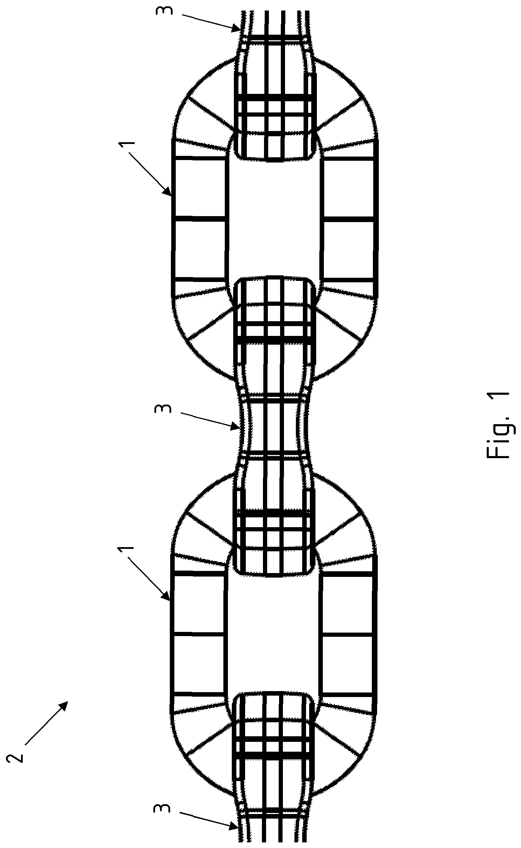

Figur 1 zeigt ein erfindungsgemäßes Kettenglied 1 in Draufsicht, als Teil eines Ausschnitts einer Gliederkette 2. Die Kettenglieder 1 sind hier als Horizontalglieder ausgeführt. Die Vertikalglieder 3 verbinden die Kettenglieder 1, wobei die Vertikalglieder 3 anderweitig hergestellt sind. Nicht näher dargestellt gliedern sich dann auf die Bildebene bezogen rechts und links weitere Kettenglieder 1 in Form von Horizontalgliedern, gefolgt von einem weiteren Vertikalglied 3 und folgend an.

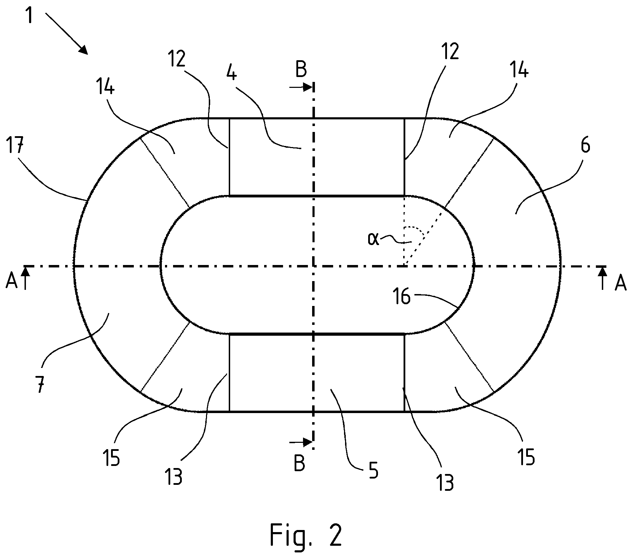

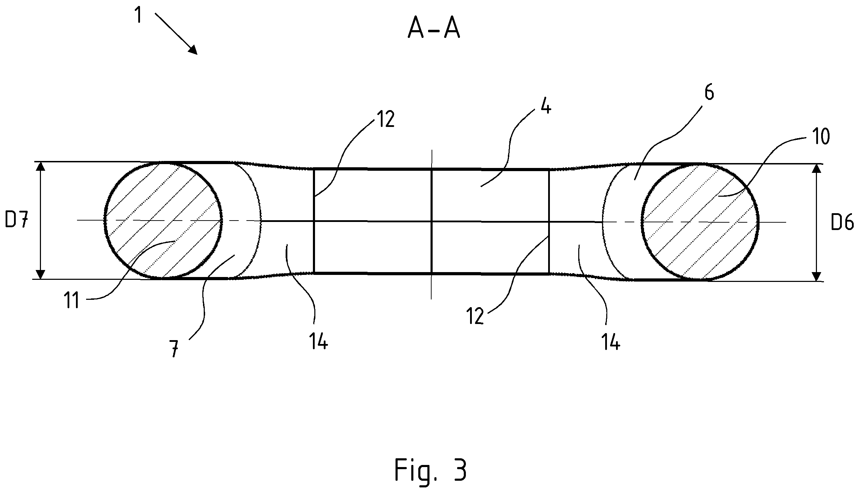

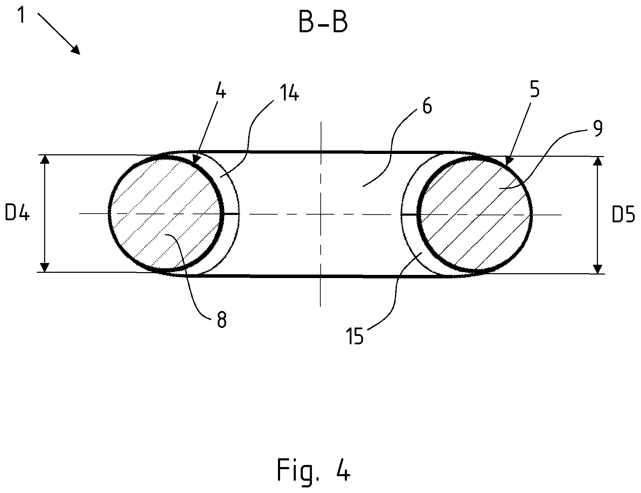

Figur 2 zeigt die Detailansicht eines erfindungsgemäßen Kettengliedes 1 in Draufsicht. Das Kettenglied 1 weist zwei parallel zueinander verlaufende Schenkel 4, 5 auf, die endseitig über Rundungen 6, 7 miteinander verbunden sind. Die Schenkel 4, 5 weisen Querschnittflächen 8, 9 auf, die jeweils kreisrund ausgebildet sind, siehe Figur 4. Auch die Rundungen 6, 7 weisen Querschnittsflächen 10, 11 auf, die ebenfalls jeweils kreisrund ausgebildet sind, siehe Figur 3. Die Querschnittsflächen 8, 9 der Schenkel 4, 5 sind geringer gegenüber den Querschnittsflächen 10, 11 der Rundungen 6, 7. Am jeweiligen Ende 12, 13 der Schenkel 4, 5 erstreckt sich ein Übergangsbereich 14, 15 zu den Rundungen 6, 7 hin. Auch die Übergangsbereiche 14, 15 sind im Verlauf kreisrund ausgebildet. Die Übergangsbereiche 14, 15 erstrecken sich ab dem jeweiligen Ende 12, 13 der Schenkel 4, 5 in einem Winkel α von größer 0 Grad bis zu einem Winkel kleiner 45 Grad, so dass dann die Schenkel 4, 5 in die Rundungen 6, 7 übergehen.

Die innere Konturlinie 16 und die äußere Konturlinie 17 des Kettengliedes 1 weisen eine durchgehende Ovalform auf. Die Ovalform wird an keiner Stelle durch eine Einschnürung, einen Steg, einen Absatz, einen Stufenabsatz eine Schräge oder dergleichen unterbrochen.

Die in Figur 4 gezeigten Durchmesser D4, D5 der Schenkel 4, 5 sind zwischen 4 mm und 6 mm kleiner als die in Figur 3 gezeigten Durchmesser D6, D7 der Rundungen 6, 7. Ferner sind die Durchmesser D4, D5 der Schenkel 4, 5 zwischen 9 % und 11 % kleiner als die Durchmesser D6, D7 der Rundungen 6, 7.

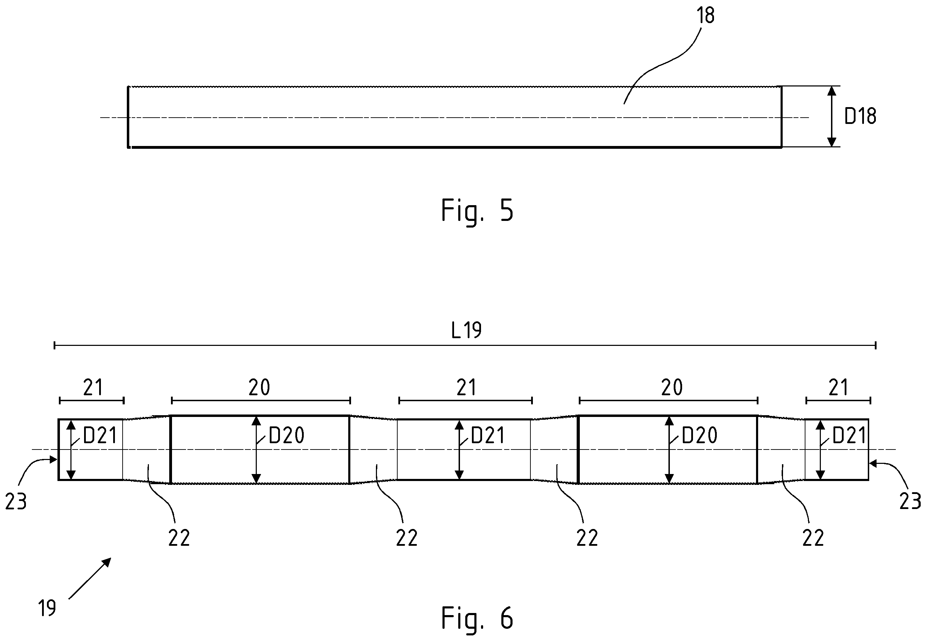

Figur 5 zeigt einen Profilstab 18, der kreisrund und rotationssymmetrisch ausgebildet ist, mit dem Durchmesser D18.

Figur 6 zeigt ein Kettengliedhalbzeug 19, welches aus dem radial geschmiedeten Profilstab 18 hergestellt wurde. Das Kettengliedhalbzeug 19 weist zwei Längenabschnitte 20 auf, deren Durchmesser D20 dem Durchmesser D18 des Profilstabes 18 entspricht, aber auch geringer sein kann. Die Längenabschnitte 20 bilden den Bereich der späteren Rundungen 6, 7 des Kettengliedes 1. Somit entspricht der Durchmesser D20 der Längenabschnitte 20 dem Durchmesser D6, D7 der Rundungen 6, 7.

Weiterhin weist das Kettengliedhalbzeug 19 die Längenabschnitte 21 auf, die den Bereichen der späteren Schenkeln 4, 5 entsprechen. Somit sind die Durchmesser D21 der Längsabschnitte 21 gleich den Durchmessern D4, D5 der Schenkel 4, 5.

Zwischen den Längsabschnitten 20 und 21 ist jeweils ein Übergangsbereich 22 angeordnet. Dieser entspricht in etwa den späteren Übergangsbereichen 14, 15 des Kettengliedes 1.

Das Kettengliedhalbzeug 19 wird an seinen stirnseitigen Enden 23 zum Kettenglied 1 verbunden.

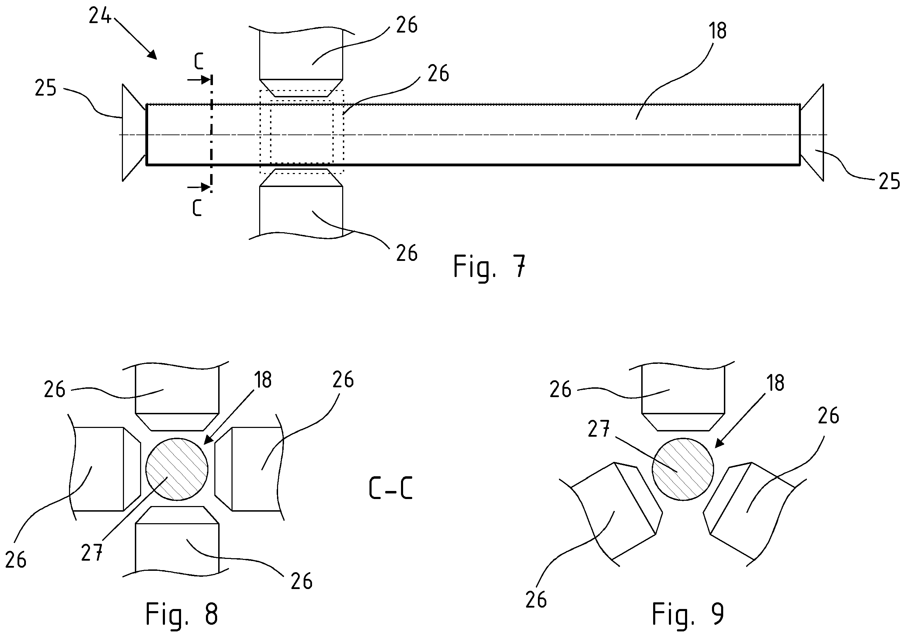

Figur 7 zeigt eine vereinfachte Darstellung einer Radialschmiedemaschine 24, in der der Profilstab 18 angeordnet ist. Der Profilstab 18 ist an seinen beiden Enden über Einspannungen 25 in der Radialschmiedemaschine 24 eingespannt. Über die Einspanner 25 kann der Profilstab 18 um seine Längsachse rotiert werden, als auch in axiale Richtung vor- und zurückbewegt werden. Radial um den Profilstab 18 herum sind gegenläufige Stempel 26 angeordnet. Dies ist insbesondere in Figur 8 zu sehen. Durch die Stempel 26 wird ein Druck auf den Profilstab 18 aufgebracht, so dass dieser in seiner Axialrichtung gestreckt wird. Die Querschnittsfläche 27 des Profilstabes 18 wird somit in dem von den Stempeln 26 bearbeiteten Bereich verkleinert. Durch die axiale Verschiebung des Profilstabes 18, in die auf die Bildebene der Figur 7 bezogene linke und rechte Richtung, kann der gesamte Profilstab 18 von den Stempeln 26 erfasst und geschmiedet werden.

Figur 9 Zeigt eine alternative Ausführungsvariante der Radialschmiedemaschine 24 mit 3 Stempeln 26.

### Bezugszeichen:

- 1 -: Kettenglied
- 2 -: Gliederkette
- 3 -: Vertikalglieder
- 4 -: Schenkel
- 5 -: Schenkel
- 6 -: Rundung
- 7 -: Rundung
- 8 -: Querschnittsfläche von 4
- 9 -: Querschnittsfläche von 5
- 10 -: Querschnittsfläche von 6
- 11 -: Querschnittsfläche von 7
- 12 -: Ende von 4
- 13 -: Ende von 5
- 14 -: Übergangsbereich
- 15 -: Übergangsbereich
- 16 -: Innere Konturlinie
- 17 -: Äußere Konturlinie
- 18 -: Profilstab
- 19 -: Kettengliedhalbzeug
- 20 -: Längenabschnitt
- 21 -: Längenabschnitt
- 22 -: Übergangsbereich
- 23 -: Stirnseitige Enden
- 24 -: Radialschmiedemaschine
- 25 -: Einspanner
- 26 -: Stempel
- 27 -: Querschnittsfläche von 18

- D4 -: Durchmesser von 4
- D5 -: Durchmesser von 5
- D6 -: Durchmesser von 6
- D7 -: Durchmesser von 7
- D18 -: Durchmesser von 18
- D20 -: Durchmesser von 20
- D21 -: Durchmesser von 21

- α -: Winkel von 14, 15

## Patentansprüche

1. Kettenglied (1) für eine Gliederkette (2), wobei das Kettenglied (1) zwei parallel zueinander verlaufende Schenkel (4, 5) aufweist, die endseitig über Rundungen (6, 7) miteinander verbunden sind und die Schenkel (4, 5) und die Rundungen (6, 7) des Kettengliedes (1) in ihren jeweiligen Querschnitten (8, 9, 10 ,11) kreisrund ausgebildet sind, wobei die Schenkel (4, 5) geringere Querschnittsflächen (8, 9) gegenüber den Querschnittsflächen (10, 11) der Rundungen (6, 7) aufweisen und das Kettenglied (1) durch Radialschmieden hergestellt ist **dadurch gekennzeichnet, dass** der Durchmesser (D4, D5) der Schenkel (4, 5) zwischen 5 % und 15 % kleiner ist als der Durchmesser (D6, D7) der Rundungen (6, 7).

2. Kettenglied (1) nach Anspruch 1, **dadurch gekennzeichnet, dass** ein Übergangsbereich (14, 15) von den Querschnittsflächen (8, 9) der Schenkel (4, 5) zu den Querschnittsflächen (10, 11) der Rundungen (6, 7) am jeweiligen Ende (12, 13) der Schenkel (4, 5) beginnt.

3. Kettenglied (1) nach Anspruch 2, **dadurch gekennzeichnet, dass** der Querschnitt des Übergangsbereiches (14, 15) in seinem Längsverlauf kreisrund ausgebildet ist.

4. Kettenglied (1) nach einem der Ansprüche 1 bis 3, **dadurch gekennzeichnet, dass** der Durchmesser (D4, D5) der Schenkel (4, 5) zwischen 9 % und 11 % kleiner ist als der Durchmesser (D6, D7) der Rundungen (6, 7).

5. Kettenglied (1) nach einem der Ansprüche 1 bis 4, **dadurch gekennzeichnet, dass** bei Seitenansicht der Mittellängsachsenebene die innere Konturlinie (16) und die äußere Konturlinie (17) des Kettengliedes (1) eine umlaufend durchgehende Ovalform aufweisen.

6. Kettenglied (1) nach einem der Ansprüche 1 bis 5, **dadurch gekennzeichnet, dass** das Radialschmieden bei axialem Vorschub erfolgt.

7. Verfahren zur Herstellung eines Kettengliedes (1) gemäß Anspruch 1, **gekennzeichnet durch** folgende Verfahrensschritte:
- Bereitstellen eines Profilstabes (18), wobei der Profilstab (18) aus einem Stahlwerkstoff ausgebildet ist,
- Einlegen des Profilstabes (18) in eine Radialschmiedemaschine (24) und radiales Schmieden unter längenabschnittsweiser Verkleinerung des Durchmessers (D18) des Profilstabes (18), so dass der Profilstab (18) im geschmiedeten Längenabschnitt axial gestreckt wird, wobei der Durchmesser (D18) zumindest im Bereich der späteren Schenkel (4, 5) verkleinert wird, wobei ein Übergangsbereich (22) zwischen den Längenabschnitten (20, 21) der späteren Rundungen (6, 7) und Schenkel (4, 5) des Kettengliedhalbzeuges (19) zwischen 3 % und 10 % der Gesamtlänge (L19) des Kettengliedhalbzeuges (19) ausmacht.
- Entnahme des radialgeschmiedeten Kettengliedhalbzeuges (19) und Umformen zu einem Kettenglied (1) sowie Verschweißen von stirnseitigen Enden (23) des umgeformten Kettengliedes (1).

8. Verfahren nach Anspruch 7, **dadurch gekennzeichnet, dass** der Durchmesser (D18) des Profilstabes (18) dem Durchmesser (D6, D7) mindestens einer Rundung (6, 7) entspricht.

9. Verfahren nach Anspruch 7 oder 8, **dadurch gekennzeichnet, dass** der Durchmesser (D18) mindestens eines Längenabschnitts (21) eines späteren Schenkels (4, 5) beim Radialschmieden verkleinert wird.

10. Verfahren nach einem der Ansprüche 7 bis 9, **dadurch gekennzeichnet, dass** der Übergangsbereich (22) zwischen den Längenabschnitten (20, 21) der späteren Rundungen (6, 7) und Schenkel (4, 5) des Kettengliedhalbzeuges (19) zwischen 4 % und 7 % der Gesamtlänge (L19) des Kettengliedhalbzeuges (19) ausmacht.

11. Verfahren nach einem der Ansprüche 7 bis 10, **dadurch gekennzeichnet, dass** die verschweißten stirnseitigen Enden (23) des umgeformten Kettengliedes (1) im Bereich der Schenkel (4, 5) liegen.

12. Verfahren nach einem der Ansprüche 7 bis 11, **dadurch gekennzeichnet, dass** der Profilstab (18) im kalten, warmem oder halbwarmem Zustand radialgeschmiedet wird.

13. Verfahren nach einem der Ansprüche 7 bis 12, **dadurch gekennzeichnet, dass** das umgeformte und verschweißte Kettenglied (1) vergütet wird.

## Claims

1. A chain link (1) for a link chain (2), wherein the chain link (1) has two parallel legs (4, 5) which are connected to one another at the ends via curves (6, 7), and the legs (4, 5) and the curves (6, 7) of the chain link (1) are circular in their respective cross sections (8, 9, 10, 11), wherein the legs (4, 5) have smaller cross-sectional areas (8, 9) compared to the cross-sectional areas (10, 11) of the curves (6, 7) and the chain link (1) is produced by radial forging, **characterized in that** the diameter (D4, D5) of the legs (4, 5) is between 5 % and 15 % smaller than the diameter (D6, D7) of the curves (6, 7).

2. The chain link (1) according to claim 1, **characterized in that** a transition region (14, 15) from the cross-sectional areas (8, 9) of the legs (4, 5) to the cross-sectional areas (10, 11) of the curves (6, 7) begins at the respective end (12, 13) of the legs (4, 5).

3. The chain link (1) according to claim 2, **characterized in that** the cross section of the transition region (14, 15) is circular in its longitudinal course.

4. The chain link (1) according to any one of claims 1 to 3, **characterized in that** the diameter (D4, D5) of the legs (4, 5) is between 9 % and 11 % smaller than the diameter (D6, D7) of the curves (6, 7).

5. The chain link (1) according to any one of claims 1 to 4, **characterized in that**, in a side view of the central longitudinal axis plane, the inner contour line (16) and the outer contour line (17) of the chain link (1) have a circumferentially continuous oval shape.

6. The chain link (1) according to any one of claims 1 to 5, **characterized in that** the radial forging takes place with axial feed.

7. A method for producing a chain link (1) according to claim 1, **characterized by** the following method steps:
- providing a profile bar (18), wherein the profile bar (18) is formed from a steel material,
- inserting the profile bar (18) into a radial forging machine (24) and radial forging with lengthwise reduction of the diameter (D18) of the profile bar (18), such that the profile bar (18) in the forged length section is axially stretched, wherein the diameter (D18) is reduced at least in the region of the later legs (4, 5), wherein a transition region (22) between the length sections (20, 21) of the later curves (6, 7) and legs (4, 5) of the chain link semi-finished product (19) accounts for between 3 % and 10 % of the total length (L19) of the chain link semi-finished product (19).
- removing the radially forged chain link semi-finished product (19) and reshaping it into a chain link (1) and welding the front ends (23) of the reshaped chain link (1).

8. The method according to claim 7, **characterized in that** the diameter (D18) of the profile bar (18) corresponds to the diameter (D6, D7) of at least one curve (6, 7).

9. The method according to claim 7 or 8, **characterized in that** the diameter (D18) of at least one longitudinal section (21) of a subsequent leg (4, 5) is reduced during radial forging.

10. The method according to any one of claims 7 to 9, **characterized in that** the transition region (22) between the longitudinal sections (20, 21) of the later curves (6, 7) and legs (4, 5) of the chain link semi-finished product (19) accounts for between 4 % and 7 % of the total length (L19) of the chain link semi-finished product (19).

11. The method according to any one of claims 7 to 10, **characterized in that** the welded front ends (23) of the reshaped chain link (1) are located in the region of the legs (4, 5).

12. The method according to any one of claims 7 to 11, **characterized in that** the profile bar (18) is radially forged in cold, warm or semi-warm state.

13. The method according to any one of claims 7 to 12, **characterized in that** the reshaped and welded chain link (1) is tempered.

## Revendications

1. Maillon (1) de chaîne pour une chaîne (2) à maillons, dans lequel le maillon (1) de chaîne présente deux branches (4, 5) s'étendant parallèlement l'une à l'autre, qui sont reliées l'une à l'autre côté extrémité par des arrondis (6, 7) et les branches (4, 5) et les arrondis (6, 7) du maillon (1) de chaîne sont réalisés dans leurs sections transversales (8, 9, 10, 11) respectives de manière circulaire, dans lequel les branches (4, 5) présentent des surfaces de section transversale (8, 9) inférieures en comparaison des surfaces de section transversale (10, 11) des arrondis (6, 7) et le maillon (1) de chaîne est fabriqué par forgeage radial, **caractérisé en ce que** le diamètre (D4, D5) des branches (4, 5) est entre 5 % et 15 % plus petit que le diamètre (D6, D7) des arrondis (6, 7).

2. Maillon (1) de chaîne selon la revendication 1, **caractérisé en ce qu'**une zone de transition (14, 15) des surfaces de section transversale (8, 9) des branches (4, 5) aux surfaces de section transversale (10, 11) des arrondis (6, 7) commence à l'extrémité (12, 13) respective des branches (4, 5).

3. Maillon (1) de chaîne selon la revendication 2, **caractérisé en ce que** la section transversale de la zone de transition (14, 15) est réalisée de manière circulaire dans son tracé longitudinal.

4. Maillon (1) de chaîne selon l'une quelconque des revendications 1 à 3, **caractérisé en ce que** le diamètre (D4, D5) des branches (4, 5) est entre 9 % et 11 % plus petit que le diamètre (D6, D7) des arrondis (6, 7).

5. Maillon (1) de chaîne selon l'une quelconque des revendications 1 à 4, **caractérisé en ce que**, en vue latérale du plan axial longitudinal central, la ligne de contour interne (16) et la ligne de contour externe (17) du maillon (1) de chaîne présentent une forme ovale continue sur tout le pourtour.

6. Maillon (1) de chaîne selon l'une quelconque des revendications 1 à 5, **caractérisé en ce que** le forgeage radial s'effectue en avance axiale.

7. Procédé pour la fabrication d'un maillon (1) de chaîne selon la revendication 1, **caractérisé par** les étapes de procédé suivantes :
- la fourniture d'une barre profilée (18), dans lequel la barre profilée (18) est réalisée à partir d'un matériau en acier,
- l'insertion de la barre profilée (18) dans une machine (24) de forgeage radial et le forgeage radial sous réduction par section longitudinale du diamètre (D18) de la barre profilée (18), de sorte que la barre profilée (18) soit étirée axialement dans la partie longitudinale forgée, dans lequel le diamètre (D18) est réduit au moins dans la zone des branches (4, 5) ultérieures,
dans lequel une zone de transition (22) entre les parties longitudinales (20, 21) des arrondis (6, 7) ultérieurs et des branches (4, 5) du demi-produit (19) maillon de chaîne représente entre 3 % et 10 % de la longueur totale (L19) du demi-produit (19) maillon de chaîne.
- le retrait du demi-produit (19) maillon de chaîne forgé radialement et le formage en un maillon (1) de chaîne ainsi que le soudage des extrémités frontales (23) du maillon (1) de chaîne formé.

8. Procédé selon la revendication 7, **caractérisé en ce que** le diamètre (D18) de la barre profilée (18) correspond au diamètre (D6, D7) d'au moins un arrondi (6, 7).

9. Procédé selon la revendication 7 ou la revendication 8, **caractérisé en ce que** le diamètre (D18) est réduit d'au moins une partie longitudinale (21) d'une branche (4, 5) ultérieure lors du forgeage radial.

10. Procédé selon l'une quelconque des revendications 7 à 9, **caractérisé en ce que** la zone de transition (22) entre les parties longitudinales (20, 21) des arrondis (6, 7) ultérieurs et les branches (4, 5) du demi-produit (19) de maillon de chaîne représente entre 4 % et 7 % de la longueur totale (L19) du demi-produit (19) de maillon de chaîne.

11. Procédé selon l'une quelconque des revendications 7 à 10, **caractérisé en ce que** les extrémités frontales (23) soudées du maillon (1) de chaîne formé se trouvent dans la zone des branches (4, 5).

12. Procédé selon l'une quelconque des revendications 7 à 11, **caractérisé en ce que** la barre profilée (18) est forgée radialement à l'état froid, chaud ou semi-chaud.

13. Procédé selon l'une quelconque des revendications 7 à 12, **caractérisé en ce que** le maillon (1) de chaîne formé et soudé est trempé.
